# EUROPEAN PATENT APPLICATION

(11) **EP 2 280 400 A1**
(43) Date of publication of application: **02.02.2011**
(21) Application number: 09731619.4
(22) Date of filing: 14.04.2009
(51) Int. Cl.: G21C 3/62

(54) **METHOD FOR PRODUCTION OF NUCLEAR FUEL PELLET, FUEL ASSEMBLY, METHOD FOR PRODUCTION OF THE FUEL ASSEMBLY, AND URANIUM POWDER**

(30) Priority: 16.04.2008 JP 2008106896; 19.11.2008 JP 2008295954
(71) Applicant: Kabushiki Kaisha Toshiba, Minato-ku Tokyo 105-8001 (JP)
(72) Inventor: WATANABE, Shouichi, Yokohama-shi Kanagawa 235-8523 (JP); KUMANOMIDO, Hironori, Tokyo 105-8001 (JP); MITSUHASHI, Ishi, Tokyo 105-8001 (JP); SUGAHARA,Satoshi, Tokyo 105-8001 (JP); UEDA, Makoto, Kawasaki-shi Kanagawa 210-0024 (JP)
(74) Representative: Shindler, Nigel
(86) International application number: PCT/JP2009/001708
(87) International publication number: WO 2009/128250

(57) **Abstract**

Among fuel rods 13, 14, 15, 16, 17, 18, 19 constituting a fuel assembly, Gd compound oxide is added to low Gd containing fuel rods 16, 17, 18 containing uranium dioxide of which enrichment exceeds 5 wt%. The Gd compound oxide is oxide of gadolinium and rare earth element "A" except for gadolinium and is expressed as a chemical formula A₁₋ₓGdₓO_{2-0.5x} or a chemical formula A₁₋ₓGdₓO_{1.5}. As the rare earth element "A", cerium Ce, lanthanum La or erbium Er can be used.

## Description

### [Technical Filed]

This invention relates to a manufacturing method of a nuclear fuel pellet, a fuel assembly for a nuclear reactor and a manufacturing method thereof and uranium powder.

### [Background Art]

In order to realize increase of the output power of a nuclear power plant and a longer operation cycle, and in addition, to reduce a number of spent fuel assemblies and to improve economical efficiency, it is desirable to increase uranium enrichment of fuel. To Increase the uranium enrichment, i.e. to increase the concentration of ²³⁵U in uranium, reduces the number of new reload fuel assemblies and the amount of spent fuel assemblies required in order to generate the same amount of electricity and contributes to reduce the fuel cycle cost greatly.

However, a fuel fabrication facility actually operated in a commercial scale is generally designed to ensure nuclear criticality safety if the uranium enrichment does not exceed 5%. The safety review of such a facility is performed based on a "Safety Review Guideline for Uranium Processing Facility", it is confirmed by reviewing that nuclear criticality safety can be ensured etc., and establishment of the facility is permitted. On the other hand, the facility where the uranium of which enrichment exceeds 5% is handled, is regulated more strictly based on "Safety Review Guideline for Specific Uranium Processing Facility".

Therefore, in order to use the fuel assembly using uranium of which enrichment exceeds 5% for a reactor, from a viewpoint of criticality control, a drastic design change of the fabrication facility and a modification of the equipment may be required and cost may increase. If uranium of which enrichment exceeds 5% is used, also the design change and the modification of equipment may be required in each process of new fuel transportation and new fuel storage, etc., and cost may go up. Therefore, the advantages of fuel cycle cost reduction according to the increase of enrichment of nuclear fuel may be cancelled.

Conventionally it is known that the burnup characteristics of nuclear fuel assembly is improved by using the nuclear reactor fuel which contains the burnable poison such as gadolinium oxide (gadolinia, Gd₂O₃) as a fuel mainly for light water reactors. For the nuclear fuel having this object, 1 to 15 weight % of concentration of gadolinium oxide is added to the nuclear fuel pellet which is main part of nuclear fuel material is uranium dioxide (UO₂) and is used as a part of fuel assembly.

For example, a configuration in which average enrichment of uranium 235 of the fuel assembly to be loaded in a reactor core is set to 3.0 weight % and 10.0 weight % of gadolinia is added to some fuel rods of the fuel assembly is illustrated in the patent document 3.

On the other hand, in order to improve a fuel economy and to use uranium resources effectively in a future light water moderated reactor, studies for using fuel of which enrichment of uranium 235 is higher than that of "5.0 or less weight %" that is the conventional setting, in other words, enrichment is set more than 5.0 weight % have been started. It is studied that, in case of using fuel of such high enrichment, at a fabrication facility where the final stage of a fuel manufacturing processes, by adding burnable poison to uranium of which enrichment is higher than 5 weight %, that is an enrichment at which the critical safety is secured in a conventional design, criticality safety during treatment at the existing production facility after addition is made secured (see patent document 4 for example).

The content rate of the burnable poison added for this case may be very much smaller than that of the burnable poison added for the improvement of burnup characteristics of the conventional fuel assembly. For example, in case that gadolinia is added as the burnable poison, unless the uranium 235 enrichment does not exceed 10 weight %, as much as 0.1 weight % or usually less than this value of gadolinia concentration is enough for achievement of the object of securing the criticality safety.

### [Prior Art Documents]

### [Patent Document]

[Patent Document 1] Japanese Patent Application Publication 2004-177241
[Patent Document 2] Japanese Patent Application Publication Hei 4-212093
[Patent Document 3] Japanese Patent Application Publication Hei 9-80180
[Patent Document 4] Japanese Patent Application Publication 2004-177241

### [non-Patent Document]

[non-patent document 1] Compiled by Nuclear Materials Regulation Division / Nuclear Safety Bureau / Science and Technology Agency, "Nuclear Criticality Safety Handbook", Nikkan-shobou, October 31, 1988.

### [Problem to be Solved by the Invention]

In order to adopt nuclear fuel containing uranium of which enrichment exceeds 5 wt %, from a viewpoint of criticality control, cost may increase because of a design change and a modification of the equipment at each stage of process and the advantages of fuel cycle cost reduction according to the increase of enrichment of nuclear fuel may be offset. Therefore, a countermeasure against this is required. In case of adopting uranium of which enrichment exceeds 5 wt%, the practical upper limit of uranium enrichment for commercial light water reactors is about 10 wt%.

One of the ways to use nuclear fuel of which uranium enrichment exceeds 5 wt% in a conventional fabrication facility etc. is to add large neutron absorption cross section material to uranium so as to reduce neutron multiplication factor of the mixture to about that of fuel of which enrichment is equal to or less than 5 wt%. In case of reducing the neutron multiplication factor by adding large neutron absorption cross section material, smaller amount of addition is preferable to reduce its effect to the behavior of neutrons in the reactor.

One of the large neutron absorption cross section materials is gadolinium (Gd), which is used to control reactivity during an operation cycle, for example. Because neutron absorption cross section of gadolinium is very large, very small amount is enough for reducing neutron multiplication factor of a fuel. However, in case of adding very small amount of gadolinia (Gd₂O₃) to uranium, lack of uniformity of concentration of gadolinia in mixture powder with uranium dioxide or in a sintered pellet may prevent from working to reduce the neutron multiplication factor. On the other hand, to increase the concentration of large neutron absorption cross section material so as to compensate the reduction of the neutron multiplication factor suppressing effect because of the lack of uniformity may reduce reactivity during an operation cycle and may increase the fuel cycle cost.

In patent document 1, the way to secure criticality safety by adding only very small amount of erbium oxide (Er₂O₃), of which neutron absorption cross section is smaller than gadolinia (Gd₂O₃), to UO₂ pellet is illustrated. The criticality safety can be secured by applying boron (B) etc. to the surface of a UO₂ pellet or inner surface of fuel cladding as shown in patent document 2.

However, the thermal neutron absorption cross sections of Er-167 and B-10 at a room temperature (0.025eV) are about 640 barns and about 3,840 barns respectively, and are much smaller than 254,080 barns that is a value for Gd-157 which is one of Gd isotopes. Therefore, if erbium or boron is used for nuclear fuel, depending on the concentration of those burnable poisons, the burnable poison may remain at the end of the operation cycle and the reactivity loss of a core may occur. If the burnable poison remains at the end of the operation cycle, it becomes difficult to achieve the effect of the fuel cycle cost reduction by increasing uranium enrichment.

Although burnable poison represented by gadolinium is used for taking advantage of characteristics that a neutron absorption cross section is large, since the neutron absorption cross section is large, when adding it to a nuclear fuel pellet by low concentration, it will be necessary to avoid aggregation of particles and to make it disperse as much widely as possible. This is because thermal neutron mean free path in gadolinia is about 10 micrometers and the neutron absorption effect decreases according to the self-shield effect if there is a lump of gadolinia particles larger than it.

If 1 to 15 weight % of gadolinia is added to a conventional nuclear fuel pellet, this self-shield effect has a characteristic which must be designed as an original characteristic of the product. However, if 0.1 weight % or less of gadolinia is added, the difference in the self-shield effect according to the extent of dispersion of gadolinia particles will appear greatly in the effect on the neutron absorption effect. For this reason, it is necessary to inhibit the self-shield effect by dispersing each particle as much as possible using powder with smaller diameter of additive gadolinia particles.

However, in the production of nuclear fuel pellets to which oxide of burnable poison such as gadolinia is added at relatively high-concentration, such as 1 to 15 weight %, it has been an object, from a viewpoint of inhibition of generation of micro crack in a sintered pellet and increase of fission product gas release rate, to enlarge grain diameter of uranium dioxide, oxide of burnable poison and solid solution of them. On the other hand, when adding burnable poison at relatively low concentration as 0.1 or less weight % to the nuclear fuel oxide, the object of inhibition of increase of fission product gas release rate is more important rather than the object of inhibition of micro crack.

In case of adding low concentration of burnable poison oxide powder of which diameter is very small and mixing it by a conventional manufacturing method of the nuclear fuel pellet with additive burnable poison, since the burnable poison oxide particles cohere by electro statistic adhesion etc., it is difficult to mix as the particles are dispersed. In the pellet manufactured from this sintered powder mixture and nuclear fuel oxide as the burnable poison oxide particles cohered, burnable poison oxide forms solid solution of a lump of which size is equal to or larger than 10 micrometers, self-shielding effect reduces the effect of neutron absorption and the desired neutron absorption effect as the nuclear fuel pellet containing additive burnable poison can not be realized.

On the other hand, in case of setting the amount of additive burnable poison larger to compensate the reduction of neutron absorption effect caused by self-shielding and mixing it, the neutron absorption effect varies widely and larger uncertainty should be included in nuclear design of fuel assembly to be loaded in a reactor.

Therefore, the object of the present invention is to enable to control criticality without large increase of cost in case of using uranium for nuclear fuel of which enrichment exceeds 5 wt%.

### [Means for solving the problem]

In order to achieve the object described above, there is provided a fuel assembly comprising a fuel element containing Gd compound oxide and uranium dioxide of which enrichment exceeds 5%, the Gd compound oxide containing gadolinium and rare earth element "A" except for gadolinium and being expressed as a chemical formula A₁₋ₓGdₓO_{2-0.5x} or a chemical formula A₁₋ₓGdₓO_{1.5}.

There is also provided a manufacturing method of a fuel assembly comprising a mixing step of mixing Gd compound oxide containing gadolinium and rare earth element "A" except for gadolinium and being expressed as a chemical formula A₁₋ₓGdₓO_{2-0.5x} or a chemical formula A₁₋ₓGdₓO_{1.5} with uranium dioxide of which enrichment exceeds 5 wt%.

There is also provided uranium powder containing Gd compound oxide and uranium dioxide of which enrichment exceeds 5%, the Gd compound oxide containing gadolinium and rare earth element "A" except for gadolinium and being expressed as a chemical formula A₁₋ₓGdₓO_{2-0.5x} or a chemical formula A₁₋ₓGdₓO_{1.5}.

There is also provided a manufacturing method of a nuclear fuel pellet comprising: a step of pouring gadolinium oxide and chemical compound of an element except for gadolinium to liquid in a liquid container and agitating and mixing; a step of drying agitated liquid in the liquid container to generate powder containing gadolinium oxide by; a step of mixing the powder containing gadolinium oxide and nuclear fuel oxide to obtain powder containing nuclear fuel oxide by; and a step of moulding and sintering the powder containing nuclear fuel oxide to manufacture a nuclear fuel pellet.

### [Advantage of the Invention]

According to the present invention, it is possible to control criticality without large increase of cost in case of using uranium for nuclear fuel of which enrichment exceeds 5 wt%.

### [Brief Description of the Drawings]

[FIG. 1] It is a transverse cross sectional view of a first embodiment of a fuel assembly according to the present invention.
[FIG. 2] It is a longitudinal cross sectional view of a fuel rod of a first embodiment of a fuel assembly according to the present invention.
[FIG. 3] It is a graph illustrating effective neutron multiplication factor of a system having a sphere of UO2 powder of which metal mass is 33 kg, the system having 30 cm thickness of water reflector.
[FIG. 4] It is a graph illustrating a relationship between equivalent concentration of gadolinia, which should be added to UO2 powder of which enrichment exceeds 5 wt%, and enrichment of uranium.
[FIG. 5] It is a graph illustrating neutron infinite multiplication factor at a hot status of a fuel assembly of a first embodiment according to the present embodiment.
[FIG. 6] It is a graph illustrating a range of equivalent concentration of gadolinia which should be added to a low gadolinia fuel rod of a fuel assembly of a first embodiment according to the present invention.
[FIG. 7] It includes schematic views illustrating a number of Gd compound oxide particles in cases that equivalent concentrations of gadolinia in a pellet are same and Gd concentration in a Gd compound oxide is different, (a) for the high Gd concentration, (b) for the low Gd concentration.
[FIG. 8] It is a schematic graph illustrating a relationship between total neutron absorption effect of Gd assuming amount of Gd contained in a unit volume of U02 and a diameter of Gd compound oxide particle.
[FIG. 9] It is a flow chart illustrating steps of manufacturing a nuclear fuel pellet used for a fuel assembly of a first embodiment according to the present invention.
[FIG. 10] It is a schematic view of a state of mixture of gadolinia particles and uranium dioxide particles for an explanation as examples for comparison to a fuel assembly of a first embodiment according to the present invention, (a): before mixture, (b): a conventional case where both particles are mixed in air, and (c) a case of ideal mixing.
[FIG. 11] It is a schematic view of a state of mixture of gadolinia particles, cerium oxide particles and uranium dioxide particles for an explanation of an effect of a fuel assembly of a first embodiment according to the present invention.
[FIG. 12] It is a transverse cross sectional view of a second embodiment of a fuel assembly according to the present invention.
[FIG. 13] It is a transverse cross sectional view of a third embodiment of a fuel assembly according to the present invention.

### [Embodiments for Carrying Out the Invention]

Embodiments of nuclear fuel according to the present invention will be described below with reference to the accompanying drawings. The same symbols are given to the same or similar configuration and duplicated descriptions may be omitted.

### [First embodiment]

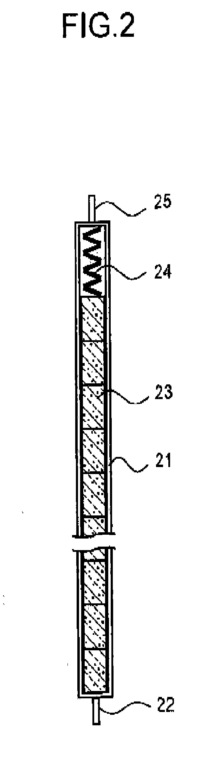

FIG. 2 is a longitudinal cross sectional view of a fuel rod of a first embodiment of a fuel assembly according to the present invention.

The fuel rod of this embodiment has a cladding 21, pellets 23, a lower end plug 22, an upper end plug 25 and a plenum spring 24. The cladding 21 is a tube formed in a cylindrical shape with zirconium alloy. The pellet 23 is what uranium dioxide etc. is sintered in a columnar shape of which height is about 1 cm for example. A plurality of the pellets 23 are contained in the cladding 21. The lower end plug 22 is welded to the lower end of the cladding 21. The upper end plug 25 is welded to the upper end of the cladding 21. The plenum spring 24 is arranged between the upper end plug 25 and the end surface of the pellet 23 and the pellets 23 are pressed and supported.

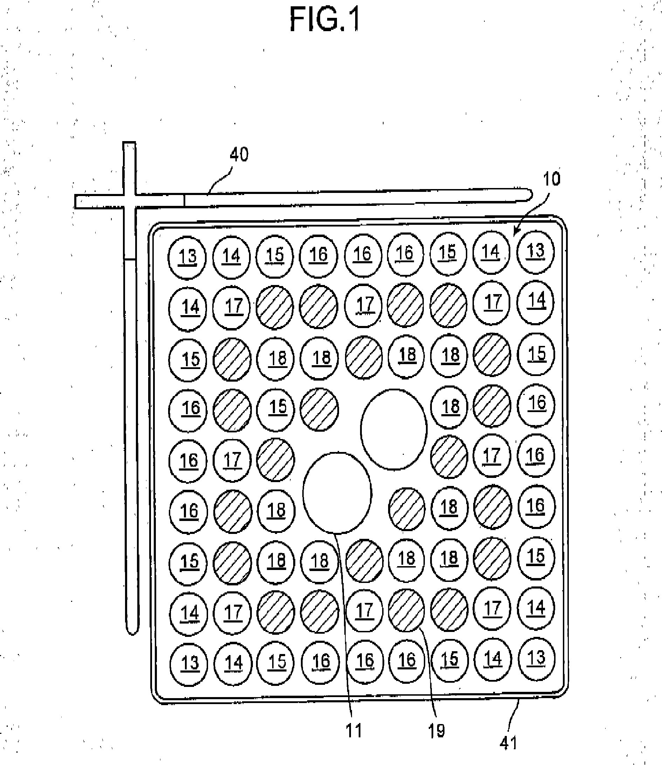

FIG. 1 is a transverse cross sectional view of a first embodiment of a fuel assembly according to the present invention. In FIG. 1, the arrangement of this fuel assembly loaded in a nuclear reactor with a control rod 40 is also shown.

The fuel assembly 10 of this embodiment is loaded in a boiling water reactor (BWR) in a state equipped with channel box 41. The fuel assembly 10 has fuel rods 13, 14, 15, 16, 17, 18, 19 and water rod 11. The water rod 11 is a tube formed with zirconium alloy so that water flow therein. This fuel assembly 10 is an example designed as a reload fuel assembly of which average enrichment of uranium is about 6.2 wt% assuming that an operation cycle is two years and average discharge exposure is 70 GWd/t.

Seventy-four fuel rods 13, 14, 15, 16, 17, 18, 19 and two water rods 11 are bundled in a tetragonal lattice of nine columns by nine rows for example. The two water rods 11 are arranged in the location which occupies seven positions of a tetragonal lattice near the center of the transverse of fuel assembly 10. The seventy-four fuel rods 13, 14, 15, 16, 17, 18, 19 which are fuel elements are arranged in the remaining positions of the tetragonal lattice. The fuel rods 13, 14, 15, 16, 17, 18, 19 and water rod 11 are supported with the tie plates at the upper end, and the bottom end and are restricted to move transversely by spacers arranged at, for example seven positions between the tie plates.

The seventy-four fuel rods 13, 14, 15, 16, 17, 18, 19 can be categorized into uranium fuel rods 13, 14, 15, high gadolinia containing fuel rods 19 and low gadolinia containing fuel rods 16, 17, 18. The uranium fuel rods 13, 14, 15 are fuel rods containing the pellets 23 made of uranium dioxide of which enrichment does not exceed 5 wt%. In this embodiment, as the uranium fuel rods 13, 14, 15, three types, i.e. uranium fuel rods 13 of which uranium enrichment is 3 wt%, uranium fuel rods 14 of which uranium enrichment is 4 wt% and uranium fuel rods 15 of which uranium enrichment is 5 wt%, are used.

The high gadolinia containing fuel rod 19 is a fuel rod containing the pellets 23 containing relatively high concentration of gadolinia (Gd₂O₃) in uranium dioxide. The gadolinia contained in the pellet 23 contained in high gadolinia containing fuel rod 19 is added for the purpose such as to flatten excess reactivity of the reactor core during the operation cycle. The concentration of gadolinia in the pellet added for such an object is generally more than 1 wt%. Uranium of which enrichment is 6 wt% is used for the pellets 23 contained in the high gadolinia containing fuel rod 19.

The low gadolinia containing fuel rods 16, 17, 18 contain the pellets 3 containing uranium dioxide of which enrichment exceeds 5% and Gd compound oxide of gadolinium and rare earth element except for gadolinium. The gadolinium contained in the low gadolinia containing fuel rods 16, 17, 18 is added mainly for the purpose of securing criticality safety until loaded in the nuclear reactor such as fabrication and transport of the fuel and the concentration of addition is less than about 0.1 wt%. In this embodiment, as the low gadolinia containing fuel rods 16, 17, 18, fuel rod 16 using UO₂ of which enrichment is 6 wt% and is added the compound oxide of which concentration is 53 ppm as an equivalent value of gadolinia, fuel rod 17 using UO₂ of which enrichment is 7 wt% and is added the compound oxide of which concentration is 110 ppm as an equivalent value of gadolinia and fuel rod 18 using UO₂ of which enrichment is 8 wt% and is added the compound oxide of which concentration is 170 ppm as an equivalent value of gadolinia.

In this explanation, the compound oxide represents oxide of two or more kinds of metal and maintaining stoichiometrical composition also in a micro structure. The Gd compound oxide represents oxide with gadolinium Gd and other rare earth elements "A" and the chemical formula is expressed as A₁₋ₓGdₓO_{2-0.5x} or A₁₋ₓGdₓO_{1.5} where "X" represents a fraction of Gd atoms to rare earth element "A" atoms. As the rare earth element "A", cerium Ce or lanthanum La can be used, for example. The equivalent value of gadolinia represents a value converted as gadolinia (Gd₂O₃) is separated out of the Gd compound oxide. The equivalent concentration of gadolinia is a concentration of gadolinia supposing that Gd in the Gd compound oxide exists independently as gadolinia.

In the criticality safety handbook (non-patent document 1), "full submersion" is assumed as the severest case on criticality safety. The condition of this "full submersion" is a condition that nuclear fuel material is permeated and surrounded by water. In the condition of "full submersion", the "minimum estimated criticality value" and the "minimum estimated lower-limit criticality value" are defined for the system of homogeneous UO₂ and H₂O for whole range of uranium concentration as a limiting value of "mass control" or "geometry control". The "mass control" represents to control so as not to handle nuclear fuel of which mass exceeds a specific limit for the criticality safety. The "geometry control" represents to control so as not to handle nuclear fuel of which volume/dimension exceeds a specific limit for the criticality safety. These limits in the steps of dealing with UO₂ powder are shown in Table 1.

Minimum values over the entire range of the concentration of uranium.

**[TABLE 1]**

| | Minimum estimated criticality value | | | | | Minimum estimated lower-limit criticality value | | | | |
|---|---|---|---|---|---|---|---|---|---|---|
| Enrichment (wt%) | 3 | 4 | 5 | 10 | 20 | 3 | 4 | 5 | 10 | 20 |
| Diameter of infinite cylinder (cm) | --- | 28.2 | 25.7 | 20.3 | 17.9 | --- | 26.9 | 24.4 | 19.4 | 17.2 |
| Thickness of infinite slab(cm) | --- | 13.4 | 11.9 | 8.42 | 6.87 | --- | 12.7 | 11.2 | 7.97 | 6.20 |
| Volume of sphere (L) | 45.4 | 32.9 | 27.4 | 15.7 | 10.8 | 40.1 | 29.4 | 24.0 | 14.1 | 9.62 |
| Mass (kgU) | 92.1 | 53.9 | 36.7 | --- | --- | 79.6 | 45.6 | 33.0 | --- | --- |

Here, the minimum estimated criticality value is a value to judge that it is critical if the mass or the volume/dimension is equal to it, the minimum estimated lower-limit criticality value is a value to judge that it is critical if the mass or the volume/dimension is equal or less than it and each value is shown in Table 1 as the minimum value for whole range of uranium concentration.

In this embodiment, about UO₂ powder dealt in a fuel fabrication facility, a very small amount of the Gd compound oxide, for example Gd compound oxide of which concentration is below 0.1 wt% as the equivalent value of gadolinia, is added uniformly to UO₂ powder of which enrichment exceeds 5 wt%. In this way, the criticality of the nuclear fuel cycle facility is controlled so that the effective multiplication factor is equal to or less than that for the condition that the mass or the shape / dimension is equal to the limit of criticality safety for UO₂ powder of which enrichment is 5 wt%. In other words, the limiting condition of the criticality safety for UO₂ powder of which enrichment exceeds 5 wt% made equal to the limiting condition of the criticality safety for UO₂ powder of which enrichment is 5 wt% by adding a very small amount of gadolinia to the UO₂ powder of which enrichment exceeds 5 wt%. Thus, each effective multiplication factor for UO₂ powder of which enrichment exceeds 5 wt% for the mass control and the geometry control can be equal to or less than the effective multiplication factor for the mass control or the geometry control shown in Table 1, respectively.

The enrichment of uranium for the reference effective multiplication factor of the limiting condition for criticality safety is not limited only to 5 wt% but can be equal to or less than 5 wt%. For example, an effective multiplication factor of uranium of which enrichment is 4.5 wt% can be the reference by taking manufacturing tolerances into account. However, it should be noted that the smaller reference enrichment of uranium causes excessive limitation for criticality safety and excessive amount of additive gadolinia.

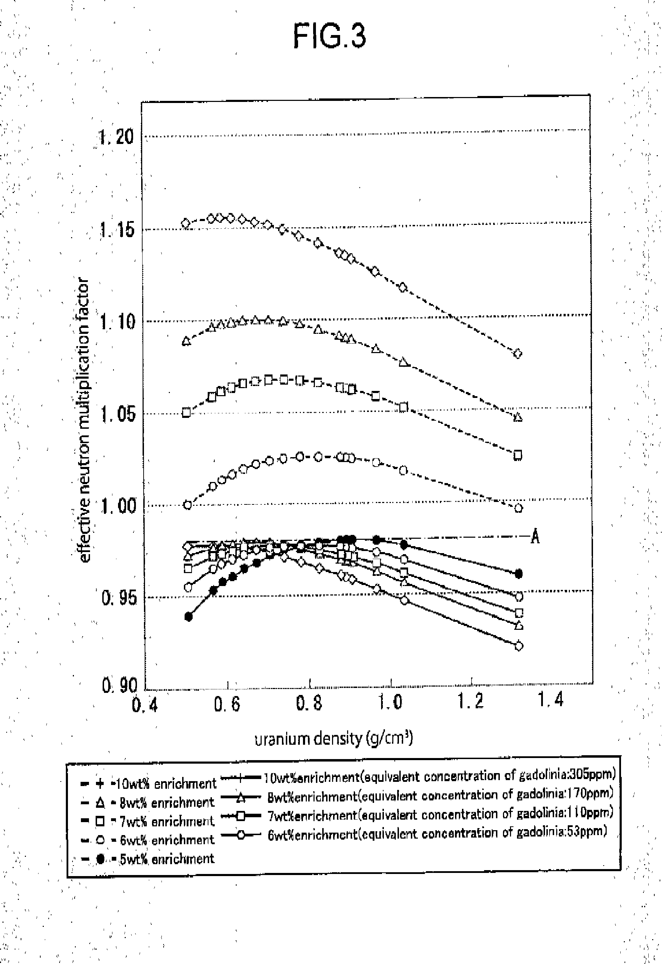

FIG. 3 is a graph illustrating effective neutron multiplication factor of a system having a sphere of UO₂ powder of which metal mass is 33 kg, and having 30 cm thickness of water reflector.

FIG. 3 shows examples of calculated equivalent concentration of gadolinia in case of use of UO₂ powder of which enrichment is 5 wt% among uranium enrichments shown in table 1 (3 wt%, 4 wt%, 5 wt%, 10 wt% and 20 wt%) and of which metal mass is 33 kg that is the minimum presumption lower limit of critical. The maximum value of the effective neutron multiplication factor for uranium of which enrichment is 5 wt% and of which metal mass is 33kg for whole range of the uranium concentration shown in table 1 is represented as kmax. A relationship between the uranium enrichment and the equivalent concentration of gadolinia is shown in case that effective neutron multiplication factors for UO₂ powder of which enrichment exceeds 5 wt% with a very small amount of additive gadolinia is substantially equal to or less than kmax is shown in FIG. 3.

Based on calculations for uniform systems having a sphere of UO₂ powder permeated by water with water reflector using various uranium densities (or various volumes of sphere) as a parameter, the equivalent concentrations of gadolinia added to UO₂ powder of which enrichments are 6 wt%, 7 wt%, 8 wt% and 10 wt% are 53ppm, 110 ppm, 170ppm and 305ppm respectively. Here, 1 ppm = 1 x 10⁻⁴ wt%.

Giving 24.4 cm as a diameter of infinite cylinder, 11.2 cm as a thickness of infinite plate and 24.0 cm of diameter of a sphere and performing neutron transport calculations using the various uranium densities as a parameter, the calculated effective neutron multiplication factors for UO₂ powder with a very small amount of additive gadolinia of which enrichment exceeds 5 wt% are less than the maximum effective neutron multiplication factor of UO₂ of which enrichment is 5 wt% and satisfy the limiting condition similarly.

In addition, by performing neutron transport calculations with the same equivalent concentration of gadolinia for each step of making of fuel pellets, manufacturing fuel rods and assembling fuel bundles following the step of handling UO₂ powder in the fuel fabrication facility, the effect of suppression of effective neutron multiplication factor of the step of handling UO₂ powder is confirmed to be the minimum. In other words, using the same equivalent concentration of gadolinia as set for the step of handling UO₂ powder, the effective neutron multiplication factor of system having UO₂ of arrangements of fuel pellets using uranium of which enrichment exceeds 5 wt%, bundles of nuclear fuel rods in bundling the nuclear fuel rods at the step of assembling the fuel assembly or assembled fuel assemblies is kept below the effective neutron multiplication factors for fuel pellets, nuclear fuel rods or fuel assemblies of which uranium enrichment is 5 wt%, and also satisfy the limiting condition.

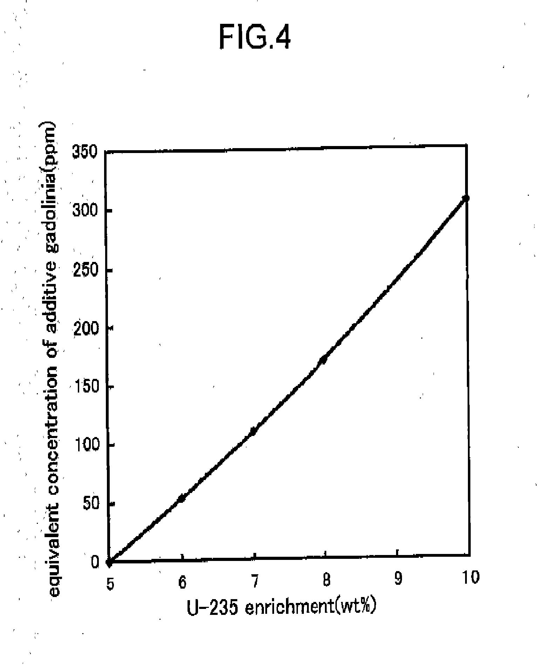

FIG. 4 is a graph illustrating a relationship between equivalent concentration of gadolinia, which should be added to UO₂ powder of which enrichment exceeds 5 wt%, and enrichment of uranium.

As described above, in the cases that enrichments of uranium are 6, 7, 8, and 10 wt%, if the equivalent concentrations of gadolinia to be added are 53, 110, 170 and 305 ppm respectively, neutron effective multiplication factors are substantially equal to or less than that for uranium of which enrichment is 5 wt%. In the case that enrichments of uranium is 0 wt%, the equivalent concentration of gadolinia to be added is 0 ppm. By connecting these points, as shown in FIG. 4, the relationship between the increment of uranium enrichment from 5 wt% of UO₂ powder of which enrichment exceeds 5 wt% and the equivalent concentration of gadolinia is found substantially proportional.

Assuming that this relationship is proportional, the proportionality constant to the increment of uranium enrichment from 5 wt% of UO₂ powder of which enrichment exceeds 5 wt% is derived as 61 x 10⁻⁴ by dividing 305 x 10⁻⁴ wt% (= 305 ppm) that is the equivalent concentration of gadolinia to be added in the case that the enrichment of uranium is 10 wt% by the increment of uranium enrichment of 10 wt % from 5 wt%, i.e. 5 wt%. That is, the equivalent concentration of gadolinia to be added is easily derived by multiplying 61 x 10⁻⁴ to the increment of uranium enrichment from 5 wt% of UO₂ powder of which enrichment exceeds 5 wt%.

As shown in FIG. 4, the slope of the equivalent concentration of gadolinia to be added to uranium of which enrichment exceeds 5 wt% becomes larger as the enrichment increases. Therefore, the equivalent concentration of gadolinia derived by using the approximated straight line tends to be larger than the equivalent concentration of gadolinia corresponding to specific uranium enrichment by performing a neutron transport calculation. So, it is a safer method from the viewpoint of criticality control.

As described above, according to this embodiment, by adding the very small amount of Gd compound oxide uniformly to UO₂ powder of which enrichment exceeds 5 wt%, it can be handled like UO₂ powder of which enrichment is 5 wt% after the addition from the view point of criticality control. Then, the criticality can be controlled like the nuclear fuel of which enrichment is 5 wt% in a fuel fabrication facility, not only at the step of handling the UO₂ powder, but also at the steps of fabricating fuel pellets, fabricating nuclear fuel rods, and assembling and storing fuel assemblies etc. Therefore, effective neutron multiplication factors in steps of fabricating ne fuels, transporting new fuels and storing fresh fuels can be limited to the limiting value to ensure criticality safety and the increase of cost of the design change, the modification of equipments etc. and following increase of cost of fabrication can be suppressed.

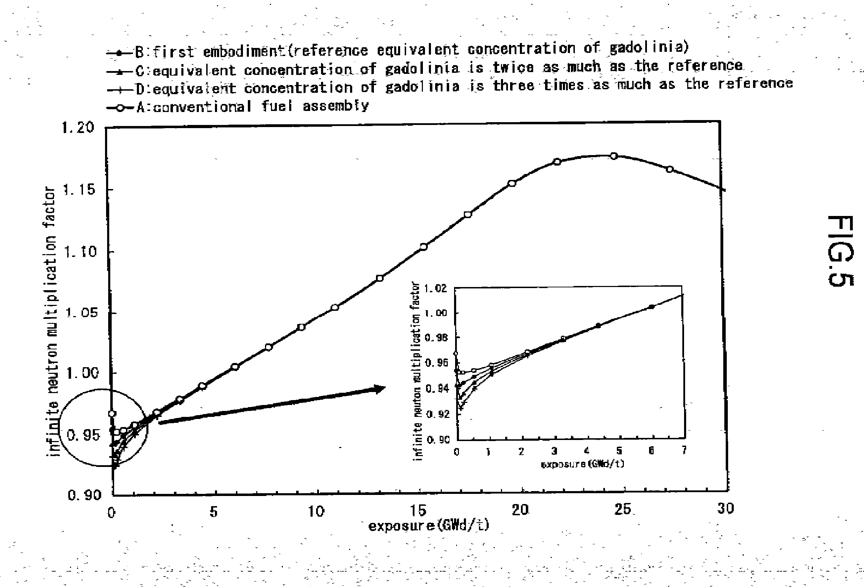

FIG. 5 is a graph illustrating neutron infinite multiplication factor at a hot status of a fuel assembly of the first embodiment according to the present embodiment. This graph shows a case that the void fraction is 40 %. The neutron multiplication factor of a sample design of a fuel assembly of which average enrichment is about 6.2 wt% without very small amount that is equal to or less than 0.1 wt% of additive gadolinia content is also shown in FIG. 5.

In FIG. 5, the line A represents exposure and neutron infinite multiplication factor of a fuel assembly without very small amount of additive gadolinia. The line B represents exposure and neutron multiplication factor of the fuel assembly according to this embodiment.

In FIG. 5, the line C represents exposure and neutron infinite multiplication factor of a fuel assembly having fuel rods using UO₂ powder of which enrichment exceeds 5 wt% of which equivalent concentrations of gadolinia added are twice as much as those of fuel rods in the fuel assembly according to this embodiment. In other words, the fuel assembly of which neutron infinite multiplication factor represented as the line C has a fuel rod using uranium with 106 ppm of equivalent concentration of gadolinia of which enrichment is 6 wt%, a fuel rod using uranium with 220 ppm of equivalent concentration of gadolinia of which enrichment is 7 wt% and a fuel rod using uranium with 340 ppm of equivalent concentration of gadolinia of which enrichment is 8 wt%.

Also in FIG. 5, the line D represents exposure and neutron infinite multiplication factor of a fuel assembly having fuel rods using UO₂ powder of which enrichment exceeds 5 wt% of which equivalent concentrations of gadolinia added are three times as much as those of fuel rods in the fuel assembly according to this embodiment. In other words, the fuel assembly of which neutron infinite multiplication factor represented as the line C has a fuel rod using uranium with 159 ppm of equivalent concentration of gadolinia of which enrichment is 6 wt%, a fuel rod using uranium with 330 ppm of equivalent concentration of gadolinia of which enrichment is 7 wt% and a fuel rod using uranium with 510 ppm of equivalent concentration of gadolinia of which enrichment is 8 wt%.

As shown in FIG.5, the difference between the neutron infinite multiplication factor of the fuel assembly without very small amount of additive gadolinia represented by the line A and the neutron infinite multiplication factor (k) of the fuel assembly represented by the line B is very small as about 1 % Δk and effects barely to reactivity of a reactor. Therefore, the difference of neutron infinite multiplication factor of the fuel assembly according to this embodiment due to the use very small amount of gadolinia is about 1 % Δk and the use of the very small amount of gadolinia does not require changing the existing design.

As shown by the line C and the line D, the differences between the neutron infinite multiplication factor of the fuel assembly without very small amount of additive gadolinia represented by the line A and the neutron infinite multiplication factors of the fuel assemblies represented by the line C and the line D are very small as about 2 % Δk and about 3 % Δk respectively, and the existing design is not required changing like the fuel assembly according to this embodiment or slight change of design such as the number, concentration or arrangement of the high gadolinia containing fuel rods 19 may be enough.

As compared with the fuel assembly without the very small amount of gadolinia, the neutron infinite multiplication factor of the fuel assembly according to this embodiment decreases quickly as exposure increases and is almost same over 5 GWd/t of cycle exposure (corresponding to a half year of operation). Therefore, reactivity loss at the end of the operation cycle due to the addition of the very small amount of gadolinia is negligible.

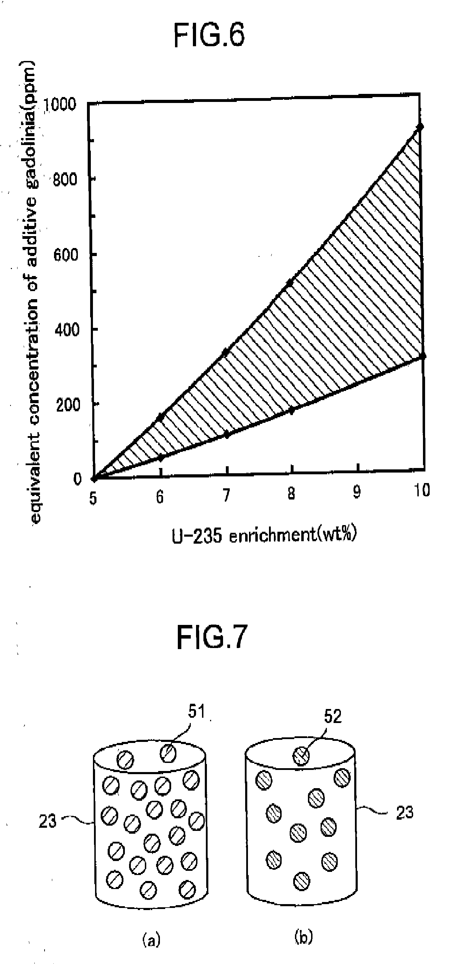

FIG. 6 is a graph illustrating a range of equivalent concentration of gadolinia which should be added to a low gadolinia fuel rod of a fuel assembly of a first embodiment according to the present invention.

From FIG. 5, it can be found that, if the equivalent concentration of the very small amount of gadolinia added to the low gadolinia containing fuel rods 16, 17 and 18 is in the range from one time to three times as the value according to this embodiment, it can be handled, i.e., fabricated or transported, in similar facility or equipment that is used for fuel rods of which enrichment does not exceed 5 wt% and the reactivity loss during the operation cycle is negligible. Then, uranium of which enrichment exceeds 5 wt% can be handled, i.e., fabricated or transported, in similar facility or equipment that is used for fuel rods of which enrichment does not exceed 5 wt% and the reactivity loss during the operation cycle is negligible by mixing with gadolinia of which amount is very small shown as the hatched range in FIG. 6. Therefore, uranium of which enrichment exceeds 5 wt% can be handled without large modification of the fabrication facility or the apparatus for transportation. And also the fuel cycle cost can be reduced further because the reactivity loss during the operation cycle is negligible.

For example, the equivalent concentration of gadolinia added to uranium of which enrichment is 10 wt% can be in the range from 305 ppm to three times of it, i.e. 915 ppm. Supposing the practical upper limit of uranium enrichment for commercial light water reactors is about 10 wt%, the concentration of very small amount of gadolinia added to nuclear fuel of which uranium enrichment exceeds 5 wt% is roughly less than 0.1 wt %.

The nuclear fuel according to this embodiment can be handled as the enrichment is equal to or less than 5 wt% even if the enrichment exceeds 5 wt% in criticality control. In other words, because fuel rods using UO₂ of which enrichment exceeds 5 wt% with very small amount, such as 0.1 wt %, of additive gadolinia can be fabricated in the existing fabrication process of fuel assembly, the fuel assembly using uranium of which enrichment exceeds 5 wt% can be provided without modification of equipments, etc.

Because the very small amount of additive gadolinia burns out rapidly in early stage of irradiation, the improvement of fuel economics due to the introduction of nuclear fuel of which enrichment exceeds 5 wt% can be achieved without the reactivity loss at the end of operation cycle.

In this embodiment, the low gadolinia containing fuel rods 16, 17, 18 contain gadolinium that is burnable poison as the compound oxide with rare earth element except for gadolinium. The neutron absorption cross section of gadolinium is larger than those of other rare earth elements. Therefore, the rare earth element that forms the compound oxide with gadolinium is used as diluent material that dilutes the neutron absorption effect of gadolinium. For example, thermal neutron cross section of cerium Ce or lanthanum La is about 10 barns that is much smaller than that of Gd. From this reason, the neutron absorption characteristics of Gd compound oxide containing cerium or lanthanum is subject to Gd.

These low gadolinia containing fuel rods 16, 17, 18 can be fabricated as follows. At first, ammonium carbonate is added to complex solution of nitrate solutions of Gd and lanthanum or cerium of which neutron absorption cross section is small to form co-precipitation and it is heated to decompose. Then powder of compound oxide of Gd and other rare earth element is obtained. By diluting a certain amount of UO₂ powder with this compound oxide of Gd and other rare earth element, oxide powder uniformly mixed will be generated.

If the amount of gadolinium added to the pellet 23 is small, the concentration distribution of the burnable poison in UO₂ powder or in the pellet 23 may lack uniformity. However, in this embodiment, use of the Gd compound oxide in which Gd is diluted with rare earth element of which neutron absorption cross section is small increases the number of powder particles necessary for a specific concentration of gadolinium and makes it easy to distribute the particles containing gadolinium uniformly.

In addition, Gd has very large microscopic neutron absorption cross section, the neutron absorption efficiency decreases due to the increase of neutron self-shielding effect as the size of the gadolinia particle increases. In this embodiment, use of the Gd compound oxide in which Gd is diluted with rare earth element of which neutron absorption cross section is small decreases the density of Gd in the particle containing gadolinium, reduces the neutron self-shielding effect and suppresses the decrease of the neutron absorption efficiency.

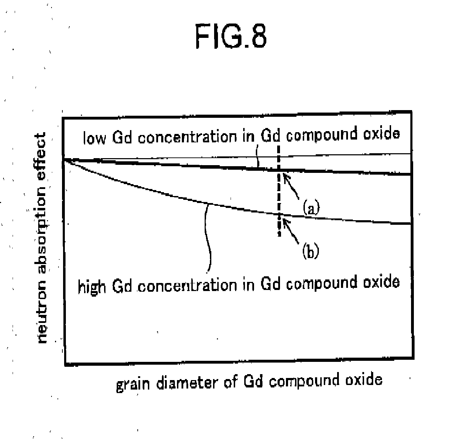

FIG. 7 includes schematic views illustrating a number of Gd compound oxide particles in cases that equivalent concentrations of gadolinia in a pellet are same and Gd concentration in a Gd compound oxide is different, (a) for the high Gd concentration, and (b) for the low Gd concentration. FIG. 8 is a schematic graph illustrating a relationship between total neutron absorption effect of Gd assuming amount of Gd contained in a unit volume of UO₂ and a diameter of Gd compound oxide particle. In the FIG. 8, two cases corresponding to FIG.7 (a) and (b), that Gd densities ρ in the Gd compound oxide particle are high and low, are shown.

As schematically shown in FIG. 7, assuming the same diameter of Gd compound oxide particles and the same equivalent concentration of gadolinia, the number of Gd compound oxide particles 51 of which Gd density in the pellets 32 is smaller is more than that of Gd compound oxide particles 51 of which Gd density in the pellet is larger. In other words, in the case that the diameters of the Gd compound oxide particles are same, assuming the same amount of Gd is contained in the unit volume, the number of powder particles increases and the particles are distributed more uniformly as the Gd density in the Gd compound oxide particle decreases.

In the case that the Gd densities in the Gd compound oxide particles are same, the neutron absorption effect increases as the diameter of Gd compound oxide particle decreases. In the case that the diameters of the Gd compound oxide particles are same, the neutron absorption effect increases as the Gd density in the Gd compound oxide particle decreases.

Supposing the fraction of Gd atoms as X for example, the chemical formula of compound oxide of Gd and Ce is represented as Ce₁₋ₓGdₓO_{2-0.5x}. And the chemical formula of compound oxide of Gd and La is represented as La₁₋ₓGdₓO_{1.5}. If the concentrations of additive Gd are same, as the Gd fraction X in the Gd compound oxide decreases, the neutron absorption effect per single powder particle decreases and the efficiency is improved more, while the amount of Gd compound oxide increases and the total number of powder particles increases. Therefore, it is much better from the view point of uniform distribution of burnable poison particles. On the other hand, it is preferable that smaller fraction of Gd compound oxide from the view point of minimizing the reduction of UO₂ inventory in the fuel assembly.

It is preferable to dilute more than three times because the dilution of Gd in the Gd compound oxide work more effectively. In other words, it is preferable that the weight fraction of Gd in the Gd compound oxide is equal to or less than 33 %. On the other hand, in case that the enrichment of uranium is equal to or less than 10 wt%, due to the concentrations of Gd required for the low gadolinia containing fuel rods 16, 17, 18 are equal to or less than 0.1 wt%, it is preferable that the maximum of the concentration of Gd compound oxide in the UO₂ powder or in the UO₂ pellet is 0.1 / 0.33 = 0.3 wt%. Because excessive dilution causes larger amount of the Gd compound oxide and reduction of UO₂ inventory, it is preferable that the weight fraction of Gd in the Gd compound oxide is equal to or more than 5 wt%.

In this embodiment, because gadolinium is used with the dilution material, the number of Gd compound oxide particles is more than in the case that gadolinium is used as oxide of single element. Therefore, the uniformity during the mixing with UO₂ powder can be improved easily. In addition, because gadolinium is a rare earth element, forming the compound oxide with other rare earth element does not cause large difference of chemical characteristics etc. from gadolinium.

The oxide powder obtained as described above can be handled as uranium of which enrichment is 5 wt% as long as the specific concentration of Gd is contained even if the enrichment of uranium exceeds 5 wt%.

Besides cerium (Ce) or lanthanum (La), praseodymium (Pr) or yttrium (Y) can be used as the rare earth element of which neutron absorption cross section is small. In addition, scandium (Sc), neodymium (Nd), promethium (Pm), thulium (Tm), holmium (Ho) or ytterbium (Yb) can be used. And further, erbium (Er), samarium (Sm) or europium (Eu) that is neutron absorber can be used as the other rare earth element because the neutron absorption cross section is smaller than gadolinium.

As described above, this embodiment reduces the effect to measures of criticality control of the nuclear fuel cycle facility by adding very small amount of Gd, burnable poison of which neutron absorption cross section is large, uniformly to uranium of which enrichment exceeds 5 wt% as the Gd compound oxide with other rare earth element. Therefore, in case that uranium of which enrichment exceeds 5 wt% is used for the nuclear fuel, criticality can be controlled without large increase of cost. Then, improvement of economics can be achieved by utilizing the effect of fuel cycle cost reduction due to the increase of uranium enrichment efficiently.

Detail of the method for manufacturing nuclear fuel pellets with additive burnable poison used for this embodiment is described below.

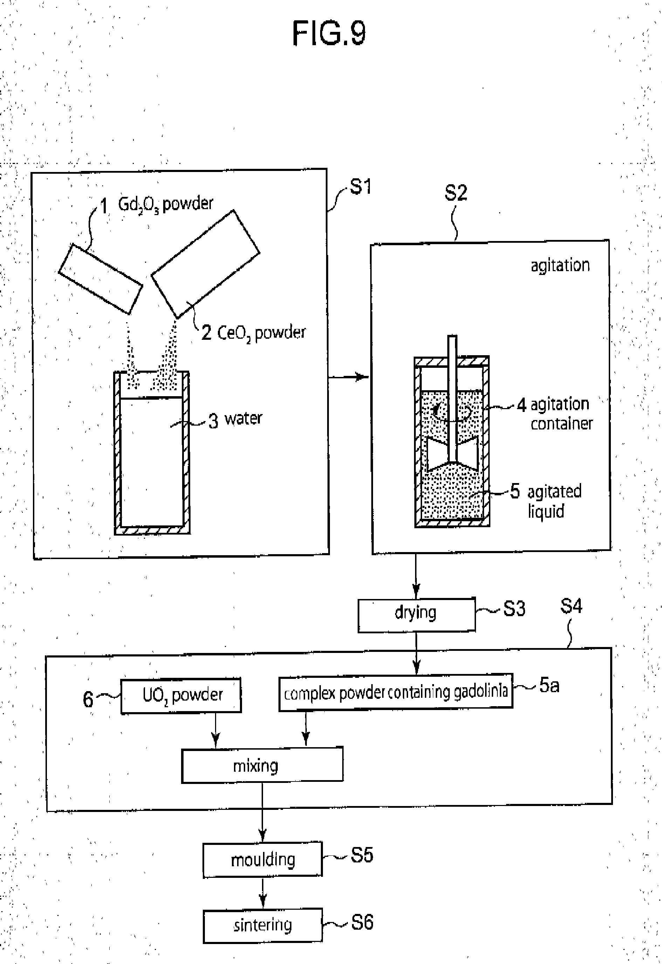

FIG. 9 is a flow chart illustrating steps of manufacturing a nuclear fuel pellet used for a fuel assembly of a first embodiment according to the present invention.

In this embodiment, a case that gadolinium oxide (gadolinia; Gd₂O₃) is used as additive oxide of burnable poison and uranium dioxide is used as oxide of nuclear fuel is described below as an example.

In this embodiment, at first, gadolinia powder 1 and chemical compound powder 2 of an element except for gadolinium are poured into liquid 3 in the container (S1), and the two kinds of powder 1, 2 and the liquid 3 are mixed by agitation container (mixer) 4 (S2). Oxide of cerium, i.e. cerium oxide (CeO₂) is used as the "chemical compound of an element except for gadolinium" (hereinafter, referred to material-to-be-mixed-with) mixed with gadolinia 1 as a preferable example, and the example explanation follows.

While water is preferable as the liquid 63 to which the gadolinia powder 61 and the powder of the material-to-be-mixed-with 62, it may be substituted with volatile liquid such as alcohol or acetone. The powder 61, 62 and the water 63 can be agitated by sealing a container containing the gadolinia powder 61, the material-to-be-mixed-with 62 and the water 63 and vibrating the container instead of agitating these with the mixer 4.

Next, powder mix 65a of gadolinia and cerium oxide is made by drying the agitated liquid 65 (S3) that is obtained by agitating the two kinds of powder 61, 62 and the water 63 (S2), and is mixed with uranium dioxide (UO₂) powder 66 (S4). The mixing of the mixture powder 65a and the uranium dioxide (UO₂) powder 66 can be performed by a method and an apparatus similar to those used in the mixing of gadolinia powder and uranium dioxide powder of the conventional nuclear fuel pellet production.

The mixture of the powder 65a and the powder 66 made as described above is supplied into a die of the nuclear fuel pellet and moulded (S5), and then it is sintered to generate the fuel pellet (S6). These steps of shaping and sintering are same as the conventional way and the schematic illustration is omitted.

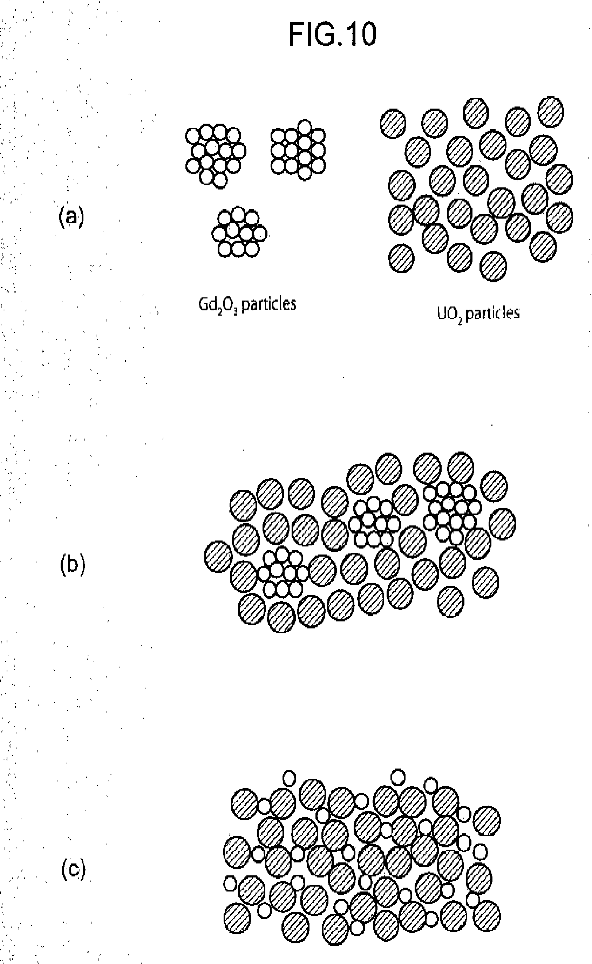

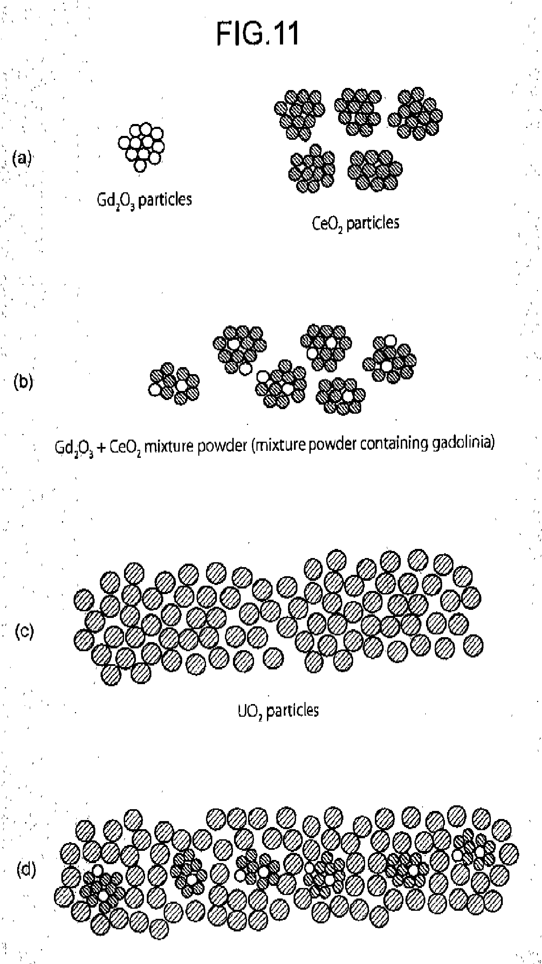

The effects of this embodiment having such configurations are explained below referring to FIG. 10 and FIG. 11 that schematically illustrate the situation of mixing of each particles and powder.

The gadolinia particles and the uranium dioxide particles before mixing are shown respectively in FIG. 10 (a). The diameters of the gadolinia particles are small and these particles aggregate with electrostatic force etc. in air. Although these gadolinia particles are put into the uranium dioxide particles in the conventional way, it is very difficult to disperse each gadolinia particles because the aggregation state is not dissolved as long as treating in air as shown in FIG. 10 (b). In order to dissolve the aggregation state of very small particles by an operation in air, an operation of grinding with pressure in a mortar etc. is necessary. On the contrary, the state that the small gadolinia particles fully disperse and mixed uniformly in the uranium dioxide particles without aggregation is the ideal state as shown in FIG. 10 (c).

Then, in this embodiment, the gadolinia particles 61 and the particles 62 (for example, cerium particles in the following explanation) of the material-to-be-mixed-with of which amount is large enough compared with the gadolinia particles 61 are mixed in the liquid 63 (S1). Mixing these in the liquid 63 (water) enables to generate the state that the gadolinia particles 61 are dispersed substantial uniformly in the cerium oxide particles 62. The agitated liquid 65 is obtained by agitating in the container 4, and then by drying it (S3), the mixture powder of the gadolinia particles and the cerium oxide particles in which the gadolinia particles are fully dispersed can be manufactured.

In these steps, considering to realize the state that gadolinia is disperse fully in the compound with element except for gadolinium, it is preferable to adjust the weight of cerium oxide particles 62 to be mixed with the gadolinia particles 61 to about 5 to 15 times as much as the weight of the gadolinia particles 62. The reason why the cerium oxide particles 62 of large amount compared with the gadolinia particles 61 is to suppress the weight fraction of gadolinia that is burnable poison and is contained in the nuclear fuel pellet to be finally manufactured by sintering and moulding below the low concentration that is equal to or less than about 0.1 wt%. Experiments have shown that such weight fraction realize that the gadolinia particles disperses in each of particles. More preferable weight fraction of the cerium oxide particles 62 is about ten times as much as that of the gadolinia particles 61.

When the small gadolinia particles 61 and the small cerium oxide particles are poured into the water 63 and agitated, each small particles float in the water and the aggregation is instantaneously dissolved. Because the specific gravity of gadolinia that is about 7.1 is substantially equal to the specific gravity of cerium oxide that is about 7.1, they are not separate during sedimentation before drying and it is easy to maintain the preferable state of mixture.

By mixing the powder mix 5a of the gadolinia particles and the cerium oxide particles shown in FIG. 11 (b) with the uranium dioxide particles shown in FIG. 11 (c) (S4), even if the powder mix 65a of the gadolinia particles and the cerium oxide particles aggregate shown in FIG. 11 (d), the powder mix of uranium dioxide can be manufactured as the gadolinia particles are dispersed in the whole of powder in the end. The product manufactured as described has the dispersion state of gadolinia that is substantially identical to the ideal state shown in FIG. 10 (c).

By manufacturing sintered pellet from the powder mix shown in FIG. 11 (d), even if gadolinia and cerium oxide form solid solution with uranium dioxide, the gadolinia region is kept very small in accordance with the size of the very small particles and the effect on the neutron absorption due to the self-shielding effect will not be produced.

Therefore, according to this embodiment, because the nuclear fuel pellets in which the small gadolinia particles are dispersed without aggregation can be manufactured, the nuclear fuel pellets with additive relatively small concentration of burnable poison of which neutron absorption effect is stable can be manufactured. By assembling the fuel assembly using the nuclear fuel pellets manufactured as described for the fuel rods, it can be possible to minimize the uncertainty factor for the nuclear design of the nuclear fuel assembly due to the dispersion of the neutron absorption effect. In other words, the manufacturing tolerance of reactivity of burnable poison can be reduced, and then the range of the uncertainty factor, i.e. the range of reactivity of the burnable poison that should be taken into account for the condition of nuclear design of the fuel assembly may be estimated as small, and as a result, it is possible to design fuel assembly of which reactivity at the beginning of the irradiation is stable.

One having ordinary skills in the art may choose better material for each element of configuration, or may add or modify steps of process if necessary.

For example, as the material-to-be-mixed-with that is mixed with gadolinia in liquid according to the present invention, oxide of rare earth element that has similar chemical characteristics is a preferable chemical form because gadolinium is one of the rare earth elements. Oxide of a plurality of rare earth elements can be used as the material-to-be-mixed-with while oxide of single rare earth element except for gadolinia can be used.

However, some of rare earth elements have large neutron absorption cross section, and choosing samarium (Sm) and europium (Eu) as powder 62 may spoil the reduction of the manufacturing tolerance of reactivity of burnable poison provided by the present invention due to the neutron absorption effect of them (microscopic neutron absorption cross section for thermal neutron : 4000 - 6000 b). So, it is more preferable to choose an element of which neutron cross section is relatively small (microscopic neutron absorption cross section is equal to or less than 12b) among rare earth elements. That is to say, it is preferable to choose at least one among cerium (Ce) mentioned above in this embodiment, praseodymium (Pr), lanthanum (La) and yttrium (Y) and to form the compound of one or more of cerium oxide (CeO₂), praseodymium oxide (Pr₆O₁₁), lanthanum oxide (La₂O₃) and yttrium oxide (Y₂O₃) as the oxide of rare earth element. Among rare earth elements, scandium (Sc), neodymium (Nd), promethium (Pm), holmium (Ho) and ytterbium (Yb) may be used similarly.

In case choosing oxide of these rare earth elements, weight fraction to gadolinia can be larger to mix and disperse the gadolinia particles in these oxide particles.

On the other hand, in case choosing oxide of an element of which neutron cross section is relatively large among rare earth elements, dysprosium (Dy), erbium (Er), thulium (Tm) or lutetium (Lu) as the powder 62, the mixture fraction can be set in accordance with the design of nuclear fuel by taking the neutron absorption effect of these elements (microscopic neutron absorption cross section is 100 - 1000b) and the neutron absorption effect of gadolinia (microscopic neutron absorption cross section is 46000b) into account. On the contrary, for Ce; Pr, La or Y, there is no limitation of the mixture fraction due to the neutron absorption effect.

As mentioned in the explanation of the step of agitation (S2), it is preferable to choose powder of which specific gravity is close to the specific gravity of gadolinia powder (about 7.4) as "the compound of element except for gadolinium" to maintain the well mixing state in the agitated liquid 6.

Therefore, the following table can be obtained by comparing the two above-mentioned points as a characteristic about major rare earth elements. Symbols of double circle, single circle and triangle are noted as in the order of preference.

**[TABLE 2]**

| Rare earth element | Microscopic neutron absorption cross section [b] | | Specific gravity of oxide (at 20°C) | |
|---|---|---|---|---|
| Sc | ○ | 24 | Δ | 4.5 |
| Y | ⊚ | 1.3 | Δ | 4.8 |
| La | ⊚ | 8.9 | ○ | 6.5 |
| Ce | ⊚ | 0.73 | ⊚ | 7.1 |
| Pr | ⊚ | 11 | ○ | 6.8 |
| Nd | ○ | 46 | ⊚ | 7.2 |
| Pm | O | 60 | | - |
| Sm | Δ | 5600 | ○ | 8.3 |
| Eu | Δ | 4300 | ○ | 8.6 |
| **Gd** | **46000** | | **7.4** | |
| Tb | Δ | 46 | | - |
| Dy | Δ | 950 | ○ | 7.8 |
| Ho | ○ | 65 | ○ | 8.4 |
| Er | Δ | 170 | ○ | 8.6 |
| Tm | ○ | 130 | ○ | 8.6 |
| Yb | ○ | 37 | Δ | 4.8 |
| Lu | A | 110 | ○ | 8.7 |

In addition, any of zirconium dioxide (zirconia, ZrO₂), aluminum oxide (alumina, aluminum₂O₃) and calcium oxide (CaO), for example, may be chosen as the material-to-be-mixed-with gadolinia ("the compound of element except for gadolinium") besides the rare earth elements mentioned above. Because the microscopic neutron absorption cross sections of zirconium (Zr), aluminum (aluminum) and calcium (Ca) are as small as 0.185b, 0.241b, and 0.44b respectively. Especially, because zirconia forms solid solution with UO₂ that is nuclear fuel oxide and alumina and calcium oxide enlarge volume of the solid solution during sintering, these oxides may be considered also as preferable choices. The mixture of these oxides and the oxide of rare earth element except for gadolinium may be adopted.

Although it is preferable to use a uranium dioxide (UO₂) or triuranium octoxide (U₃O₈) as the nuclear fuel oxide in this embodiment, in case of using U₃O₈, it is desirable to manufacture powder of U₃O₈ in a uranium fuel reconversion facility and then mix with burnable poison oxide. In case of using UO₂ as the nuclear fuel oxide, it is desirable to mix with burnable poison oxide immediately after grinding the UO₂ powder obtained in the uranium fuel reconversion facility or immediately after receiving the UO₂ transported from the uranium fuel reconversion facility into the nuclear fuel fabrication facility. In addition, powdered ammonium diuranate (NH₄)₂(U₂O₇) (ADU powder) that is obtained from UF₆ by making it react with ammonia after hydrolyzation with a wet (ADU) method can be used in place of UO₂ or U₃O₈.

### [Second embodiment]

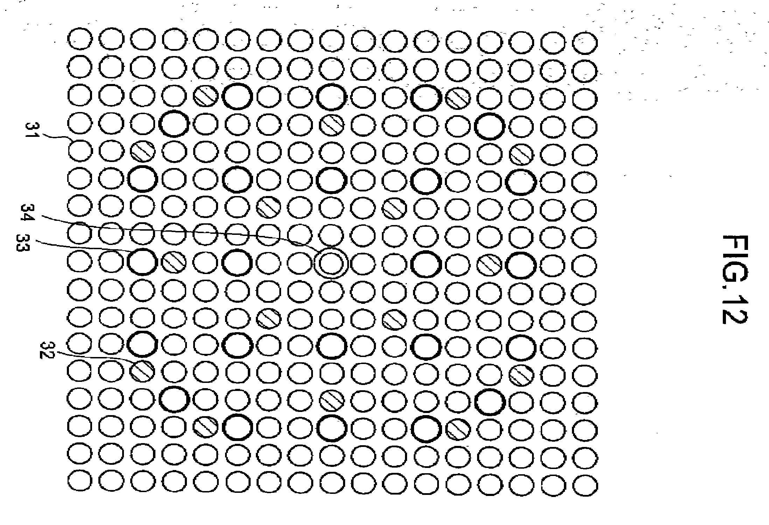

FIG. 12 is a transverse cross sectional view of a second embodiment of a fuel assembly according to the present invention.

The fuel assembly of this embodiment is loaded in a pressurized water reactor. In this fuel assembly, 264 fuel rods 31, 32 are arranged and bundled in a tetragonal lattice of 17 lines by 17 rows, control rod guide thimbles 33 are arranged at 34 lattice positions and an in-reactor instrument guide thimble 34 is arranged at the center lattice position. Fuel rods 31, 32 are categorized into low gadolinia containing fuel rods 31 and high gadolinia containing fuel rods 32.

The low gadolinia containing fuel rod 31 contains pellets 23 (see FIG. 2) containing uranium dioxide of which enrichment is 6 wt% and the additive Gd compound oxide of gadolinium and rare earth element "A" except for gadolinium of which equivalent concentration of gadolinia is 53 ppm. As the rare earth element "A", cerium Ce or lanthanum La can be used, for example. The high gadolinia containing fuel rods 32 contains pellets 23 containing uranium dioxide of which enrichment is 5 wt% and 7 wt% of additive gadolinia.

As shown in FIG. 3, the effective neutron multiplication factor of uranium of which enrichment is 6 wt% with additive Gd compound oxide of which equivalent concentration of gadolinia is 53 ppm is substantially equal to or less than that of uranium of which enrichment is 5 wt%. Therefore, during the manufacturing steps of this embodiment after addition and mixing the Gd compound oxide with uranium powder, it can be handled by the facility and the equipment for handling uranium of which enrichment is 5 wt% while criticality safety is secured.

Since the adoption of this embodiment to the fuel assembly effects rarely to the initial reactivity of the reactor and Gd contained in the fuel rod containing very small amount of the Gd compound oxide does not remain burnable at the end of the operation cycle, the reactivity loss can be reduced. The uniform addition of very small amount of the Gd compound oxide to uranium at the step of handling UO₂ powder enables to manufacture high quality fuel and to suppress the increase of the cost for modification of equipments in the fuel fabrication facility that relates to criticality safety and thus the cost for fabrication. Therefore, the increase of enrichment of nuclear fuel that is an object of introduction of nuclear fuel of which uranium enrichment exceeds 5 wt% provides the effect of drastic reduction of the number of reload fuels and the reduction of the fuel cycle cost.

Some of the fuel assemblies loaded in the pressurized water reactor do not use Gd of high concentration of which major purpose is to control the reactivity during the operation cycle. In such a case, the uniform addition of the very small amount of Gd as the Gd compound oxide with other rare earth element brings the similar effect. Nuclear fuel rods of which enrichment is equal to or less than 5 wt% may be placed at the corners or the peripheral region of the fuel assembly for flat local power distribution. A fuel assembly using borosilicate glass as burnable poison can be used.

### [Third embodiment]

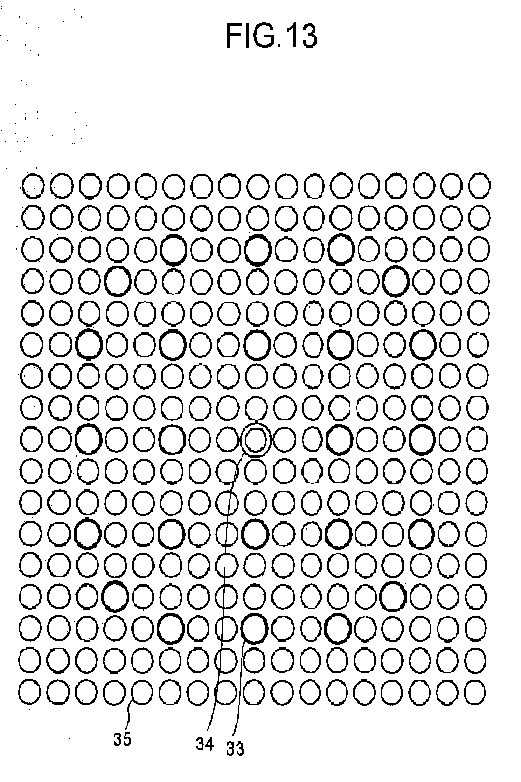

FIG. 13 is a transverse cross sectional view of a third embodiment of a fuel assembly according to the present invention.

The fuel assembly of this embodiment is loaded in a pressurized water reactor. In this embodiment, one kind of fuel rod that is the low gadolinia containing fuel rod 35 is used. This low gadolinia containing fuel rod 35 contains the fuel pellets 23 (see FIG. 2) of uranium of which enrichment is 6 wt% with additive Gd compound oxide of gadolinium and erbium. The equivalent concentration of gadolinia of the compound oxide of gadolinium and erbium is 0.3 wt%. The equivalent concentration of erbia of the compound oxide of gadolinium and erbium is 0.3 wt%. The equivalent concentration of erbia is a concentration of erbia supposing that erbium in the compound oxide exists independently as erbia.

If Er concentration in the pellet is high, Er may remain without burn at the end of the operation cycle and may cause burnup penalty. However, in this embodiment, reduction of the amount of Er by using Gd together enables to secure criticality safety and to reduce such burnup penalty. Also the mixing ratio can be set from the view point of the neutron absorption effect of Gd and Er. Since the amount of the Gd compound oxide to be added to uranium of which enrichment is equal to or less than 10 wt% is equal to or less than 0.1 wt% as the equivalent concentration of gadolinia, considering that erbium mainly controls the reactor reactivity, the preferable range of the equivalent concentration of gadolinia is 0.01 wt% that is one tenth of it.

As described above, in case that the compound oxide is made of Er and the very small amount of Gd, neutron absorption material in which Gd is diluted uniformly in Er that is the base material is obtained. Using such a high quality fuel, not only the criticality safety but also the smooth reactivity control of the reactor can be provided.

### [Other embodiment]

Above mentioned embodiments are just examples, and the present invention is not limited to those. Also each feature of the embodiments can be combined together.

### [Explanation of Reference Symbols]

10: fuel assembly, 11: water rod, 13: fuel rod, 14: fuel rod, 15: fuel rod, 16: fuel rod, 17: fuel rod, 18: fuel rod, 19: fuel rod, 20: cladding, 22: lower end plug, 23: pellet, 24: plenum spring, 25: upper end plug, 31: fuel rod, 32: fuel rod, 33: control rod guide thimble, 34: in-reactor instrument guide thimble, 35: fuel rod, 40: control rod, 41: channel box, 51: Gd compound oxide particle, 52: Gd compound oxide particle, 61: gadolinia (gadolinium oxide) powder, 62: cerium oxide (compound of element except for gadolinium) powder, 63: water (liquid), 64: agitating container (mixer), 65: agitated liquid, 65a: powder containing gadolinia (powder mix of gadolinia and cerium oxide), 66: uranium dioxide (oxide of nuclear fuel) powder

## Claims

1. A fuel assembly comprising a fuel element containing Gd compound oxide and uranium dioxide of which enrichment exceeds 5 wt%, the Gd compound oxide containing gadolinium and rare earth element "A" except for gadolinium and being expressed as a chemical formula A₁₋ₓGdₓO_{2-0.5x} or a chemical formula A₁₋ₓGdₓO_{1.5}.

2. The fuel assembly of claim 1 wherein an equivalent content rate of gadolinia in the fuel element supposing that Gd in the Gd compound oxide exists independently as gadolinia is less than 0.1 wt%.

3. The fuel assembly of claim 2 wherein enrichment of uranium in the fuel element is equal to or less than 10 wt% and an equivalent content rate of gadolinia in the fuel element supposing that Gd in the Gd compound oxide exists independently as gadolinia is equal to or more than a lower limit that is calculated by multiplying 61 x 10⁻⁴ to increment of uranium enrichment of UO₂ from 5 wt%.

4. The fuel assembly of claim 3 wherein an equivalent content rate of gadolinia in the fuel element supposing that Gd in the Gd compound oxide exists independently as gadolinia is equal to or less than a value that is three times as much as the lower limit.

5. The fuel assembly of any one of claims 1 to 4 wherein the rare earth element "A" is one or more element selected from erbium, lanthanum and cerium.

6. The fuel assembly of any one of claims 1 to 4 wherein the rare earth element "A" is one of lanthanum and cerium, and a content rate of the Gd compound oxide to total of uranium dioxide and the Gd compound oxide in the fuel element is equal to or more than 0.1 wt% and equal to or less than 0.3 wt%, and a content rate of gadolinium in the Gd compound oxide is equal to or more than 5 wt% and is equal to or less than 33 wt%.

7. The fuel assembly of any one of claims 1 to 4 wherein the rare earth element "A" is erbium, and an equivalent content rate of gadolinia in the fuel element supposing that Gd in the Gd compound oxide exists independently as gadolinia is equal to or less than 0.01 wt%.

8. The fuel assembly of one of claims 1 to 7 having a high gadolinia containing fuel element that contains gadolinium oxide of which concentration is higher than a concentration of gadolinium oxide of the fuel element supposing that Gd in the Gd compound oxide exists independently as gadolinia.

9. A manufacturing method of a fuel assembly, the method comprising a mixing step of mixing Gd compound oxide containing gadolinium and rare earth element "A" except for gadolinium and being expressed as a chemical formula A₁₋ₓGdₓO_{2-0.5x} or a chemical formula A₁₋ₓGdₓO_{1.5} with uranium dioxide of which enrichment exceeds 5 wt%.

10. Uranium powder containing Gd compound oxide and uranium dioxide of which enrichment exceeds 5 wt%, the Gd compound oxide containing gadolinium and rare earth element "A" except for gadolinium and being expressed as a chemical formula A₁₋ₓGdₓO_{2-0.5x} or a chemical formula A₁₋ₓGdₓO_{1.5.}

11. The uranium powder of claim 10 wherein enrichment of uranium is equal to or less than 10 wt% and an equivalent content rate of gadolinia supposing that Gd in the Gd compound oxide exists independently as gadolinia is equal to or more than a lower limit that is calculated by multiplying 61 x 10⁻⁴ to increment of uranium enrichment of UO₂ from 5 wt%.

12. A manufacturing method of a nuclear fuel pellet, the method comprising:
a step of pouring gadolinium oxide and chemical compound of an element except for gadolinium to liquid in a liquid container and agitating and mixing;
a step of drying agitated liquid in the liquid container to generate powder containing gadolinium oxide by;
a step of mixing the powder containing gadolinium oxide and nuclear fuel oxide to obtain powder containing nuclear fuel oxide by; and
a step of moulding and sintering the powder containing nuclear fuel oxide to manufacture a nuclear fuel pellet.

13. The method of claim 12 wherein the chemical compound of an element except for gadolinium is oxide of rare earth element.

14. The method of claim 13 wherein the rare earth element is at least one of cerium, praseodymium, lanthanum and yttrium.

15. The method of claim 12 wherein the chemical compound of an element except for gadolinium is oxide of at least one of zirconium, aluminum and calcium.

16. The method of one of claims 12 to 15 wherein a weight of the chemical compound of an element except for gadolinium in the step of agitating and mixing gadolinium oxide and chemical compound of an element except for gadolinium to in the liquid container is adjusted to 5 to 15 times as much as a weight of the gadolinium oxide.

17. The method of one of claims 12 to 16 wherein the liquid is water.

18. The method of one of claims 12 to 17 wherein the nuclear fuel oxide is one of UO₂, U₃O₈, and ADU (NH₄)₂(U₂O₇) powder.
